# EUROPEAN PATENT APPLICATION

(11) **EP 4 806 767 A1**
(43) Date of publication of application: **16.09.2026**
(21) Application number: 25205805.2
(22) Date of filing: 30.09.2025
(51) Int. Cl.: B62D 25/20

(54) **FLOOR ASSEMBLY FOR VEHICLE AND VEHICLE**

(30) Priority: 12.03.2025 CN 202510294574
(71) Applicant: Xiaomi EV Technology Co., Ltd., Beijing 100176 (CN)
(72) Inventor: ZHANG, Hongjun, Beijing, 100176 (CN); LIU, Xugang, Beijing, 100176 (CN); ZENG, Rong, Beijing, 100176 (CN); WU, Guichen, Beijing, 100176 (CN); WANG, Zhenkun, Beijing, 100176 (CN)
(74) Representative: Stöckeler, Ferdinand

(57) **Abstract**

A floor assembly(100) for a vehicle and a vehicle are disclosed. The floor assembly(100) includes a front floor (1)and a middle-back floor(2), and a whole surface of the front floor(1) extends in a fore-aft direction of the vehicle; and the middle-back floor(2) is connected to the front floor(1), a whole surface of the middle-back floor(2) extends in a first direction, and an included angle exists between the first direction and the fore-aft direction of the vehicle.

## Description

### TECHNICAL FIELD

The present invention relates to the technical field of vehicles, and in particular, to a floor assembly for a vehicle and a vehicle.

### BACKGROUND OF THE INVENTION

In the related art, for meeting use demands of users in various scenes, how to improve a passenger compartment space in a vehicle is a research target for people in the industry.

### SUMMARY OF THE INVENTION

Objectives of the present invention are to provide a floor assembly for a vehicle and a vehicle, so that while use demands of users in various scenes can be met, a passenger compartment space in a vehicle can be improved, and user experience can be improved.

For achieving the above objective, a first aspect of the present invention provides a floor assembly for a vehicle, including: a front floor, where a whole surface of the front floor extends in a fore-aft direction of the vehicle; and a middle-back floor, where the middle-back floor is connected to the front floor and a whole surface of the middle-back floor extends in a first direction, and an included angle exists between the first direction and the fore-aft direction of the vehicle.

Optionally, a rear end of the middle-back floor is higher than a front end of the middle-back floor.

Optionally, the floor assembly further includes at least one front transverse beam, the at least one front transverse beam is arranged on an upper surface of the front floor, and an upper surface of at least of the front transverse beam and an upper surface of the middle-back floor are coplanar.

Optionally, the included angle between the first direction and the fore-aft direction of the vehicle is less than 3°.

Optionally, the front end of the middle-back floor is higher than the front floor in a height direction of the vehicle.

Optionally, the floor assembly further includes at least one front transverse beam and at least one rear transverse beam, the at least one front transverse beam is arranged on an upper surface of the front floor, and the at least one rear transverse beam is arranged on a lower surface of the middle-back floor.

Optionally, the at least one front transverse beam is positionally adjustably connected to the front floor; and/or the at least one rear transverse beam is positionally adjustably connected to the middle-back floor.

Optionally, the at least one rear transverse beam is provided with at least one of an oil tank installation structure or a battery pack installation structure; and/or the at least one front transverse beam is provided with at least one of a front seat installation structure or a battery pack installation structure.

Optionally, a connection of the front floor and the middle-back floor is constructed to enable selectively designing a position of the middle-back floor relative to the front floor in the fore-aft direction so as to enable changing a length of the floor assembly in the fore-aft direction.

Optionally, the front floor and the middle-back floor are connected through a middle transverse beam, and the floor assembly is constructed to enable changing the position of the middle-back floor relative to the front floor in the fore-aft direction by designing a position of the middle transverse beam relative to the front floor and/or the middle-back floor; and/or the floor assembly is constructed to enable changing the position of the middle-back floor relative to the front floor in the fore-aft direction by selecting the middle transverse beam having different sizes in the fore-aft direction.

Optionally, the front floor and the middle-back floor are connected through a middle transverse beam, and spacing between the middle transverse beam and an adjacent front transverse beam on the front floor and the number of the front transverse beams on the front floor are determined through a length of the front floor.

Optionally, an installation space adjacent to a connection position of the middle-back floor and the front floor is formed below the middle-back floor.

Optionally, the front floor and the middle-back floor are connected through a middle transverse beam, and the installation space is located between the middle transverse beam and a rear transverse beam on a lower surface of the middle-back floor.

A second aspect of the present invention provides a vehicle, including the floor assembly provided in the first aspect.

Optionally, an installation space below a middle-back floor and adjacent to a connection position of the middle-back floor and a front floor is configured to install at least one of a vehicle-mounted charging assembly or a carbon tank.

Optionally, the vehicle includes a battery pack located below the front floor; where the battery pack extends to a position below the installation space, so that at least one of the vehicle-mounted charging assembly or the carbon tank is located between the battery pack and the middle-back floor; or the battery pack avoids the installation space from a position below the installation space, so that an avoidance channel for at least one of the vehicle-mounted charging assembly or the carbon tank is formed below the installation space.

Optionally, a first rear transverse beam adjacent to a rear end of the front floor is arranged below the middle-back floor, the installation space is located between the rear end of the front floor and the first rear transverse beam, and the battery pack is selectably connected to the first rear transverse beam.

Optionally, the vehicle includes a battery pack and an oil tank which are spaced apart in a fore-aft direction of the vehicle, and the battery pack and the oil tank are located on a lower side of the floor assembly; where at least one of a vehicle-mounted charging assembly or a carbon tank is arranged between the battery pack and the oil tank; or the at least one of the vehicle-mounted charging assembly or the carbon tank is arranged between the battery pack and a middle-back floor.

Optionally, the vehicle includes a battery pack, an oil tank and a rear power assembly which are spaced apart in a fore-aft direction of the vehicle, and the battery pack, the oil tank and the rear power assembly are arranged on a lower side of the floor assembly.

Optionally, an upper surface of the oil tank extends in a first direction, and the upper surface of the oil tank in contact with or spaced apart from a lower surface of the middle-back floor; and/or a lower surface of the oil tank extends in the fore-aft direction of the vehicle.

Optionally, at least one of a vehicle-mounted charging assembly or a carbon tank is arranged between the battery pack and the oil tank; or the at least one of the vehicle-mounted charging assembly or the carbon tank is arranged between the battery pack and a middle-back floor.

Optionally, the vehicle further includes a rear subframe, the rear power assembly is installed on the rear subframe, and the rear subframe is connected to a middle-back floor through a longitudinal beam located below the middle-back floor.

Optionally, a plurality of rear transverse beams below the middle-back floor include a first rear transverse beam, a second rear transverse beam and a third rear transverse beam which are spaced apart from a front side to a rear side of the vehicle, the battery pack is selectably connected to the first rear transverse beam, the oil tank is connected to the first rear transverse beam and the second rear transverse beam, the second rear transverse beam and the third rear transverse beam are in lap joint with the longitudinal beam respectively, the rear subframe has a first connection structure and a second connection structure, the first connection structure is connected to a lap joint position of the second rear transverse beam and the longitudinal beam, and the second connection structure is connected to a lap joint position of the third rear transverse beam and the longitudinal beam.

Optionally, the floor assembly further includes a rear storage structure connected to a rear end of the middle-back floor, and the rear storage structure is at least partially located on a rear side of the rear power assembly.

Optionally, an exhaust assembly is selectably arranged between the rear power assembly and the rear storage structure; and/or a lowest point of the rear storage structure is not less than a height of a lower edge of the battery pack; and/or the rear storage structure extends vertically to the height of the lower edge of the battery pack from a height of the rear end of the middle-back floor.

Optionally, at least two front floor lower longitudinal beams are arranged on a lower side of the front floor, and the battery pack is connected to the at least two front floor lower longitudinal beams.

Optionally, the vehicle includes a seat track, and the seat track is arranged on an upper surface of a middle-back floor; or the seat track is arranged on the upper surface of the middle-back floor and extends to a position above the front floor to be connected to a front transverse beam on the front floor.

Optionally, the seat track has an extending length ranging from 1760 mm to 2400 mm.

Optionally, the vehicle further includes a center console track, and the center console track extends to a position above a middle-back floor from a position above a front floor.

Optionally, the center console track has an extending length ranging from 1720 mm to 2800 mm.

Through the above technical solution, namely, the floor assembly for the vehicle provided by the present invention, by connecting the middle-back floor to the front floor, making the whole surface of the middle-back floor extend in the first direction, and making the included angle between the first direction and the fore-aft direction of the vehicle, that is, it may be understood that by constructing the middle-back floor as being inclined from the front floor, a larger space of a passenger compartment in the vehicle is ensured, and while the use demands of the users in various scenes such as arrangement of a bed in the passenger compartment, use for a cargo compartment or refitting by using rails such as a track are conveniently met, an installation and arrangement demand for a plurality of components such as the vehicle-mounted charging assembly, the carbon tank, the oil tank and the rear power assembly may also be met, so a space utilization ratio is high. In addition, the whole surface of the front floor extends in the fore-aft direction of the vehicle, and meanwhile, the whole surface of the middle-back floor extends in the first direction, in this way, a whole structure of the floor assembly for the vehicle may be flatter, so as to obtain a flat floor structure, a demand such as allowing a passenger in the passenger compartment to move freely or load and unload goods is conveniently met, and user experience is better improved.

Other features and advantages of the present invention are described in detail in the detailed description below.

### BRIEF DESCRIPTION OF DRAWINGS

Accompanying drawings are used for providing further understanding for the present invention, constitute a part of the specification and, together with the following detailed description, are used to explain the present invention without constituting a limitation to the present invention. In the accompanying drawings:
FIG. 1 is a schematic diagram of a floor assembly for a vehicle provided in an example implementation of the present invention.
FIG. 2 is a schematic structural diagram of a floor assembly for a vehicle provided in an example implementation of the present invention.
FIG. 3 is a schematic sectional view of a position A-A in FIG. 2.
FIG. 4 is a schematic sectional view of a position B-B in FIG. 2.
FIG. 5 is a schematic sectional view of a position C-C in FIG. 2.
FIG. 6 is a schematic sectional view of a position D-D in FIG. 2.
FIG. 7 is a schematic sectional view of a position E-E in FIG. 2.
FIG. 8 is a schematic sectional view of a position F-F in FIG. 2.

### DETAILED DESCRIPTION OF THE INVENTION

Specific implementations of the present invention are described in detail below with reference to the accompanying drawings. It is to be understood that the specific implementations described here are only for describing and explaining the present invention instead of limiting the present invention.

It needs to be noted that all actions of obtaining signals, information or data in the present invention are performed on the premise of conforming to corresponding data protection regulations and policies of the country where it is located and in a case of being authorized by corresponding device owners.

In the present invention, without explanation to the contrary, position words used such as "upper and lower" usually refer to upper and lower in a space of a floor assembly of a vehicle when the floor assembly of the vehicle is in use. "Inner and outer" refers to inner and outer of a profile of a component or a structure itself. In addition, it needs to be noted that terms used such as "first and second" are for distinguishing one element from another element and do not have a sequence and significance. Besides, in the description of the accompanying drawings, the same reference numeral in different figures represents the same element.

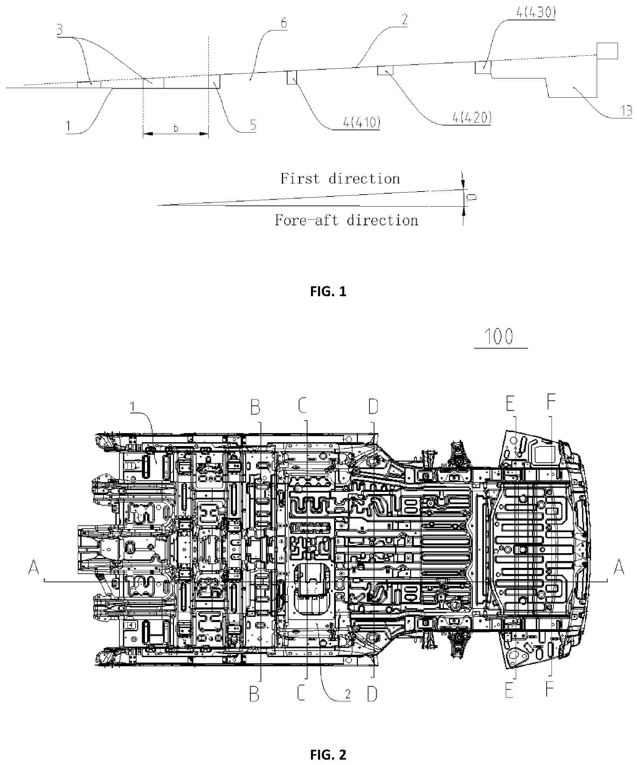

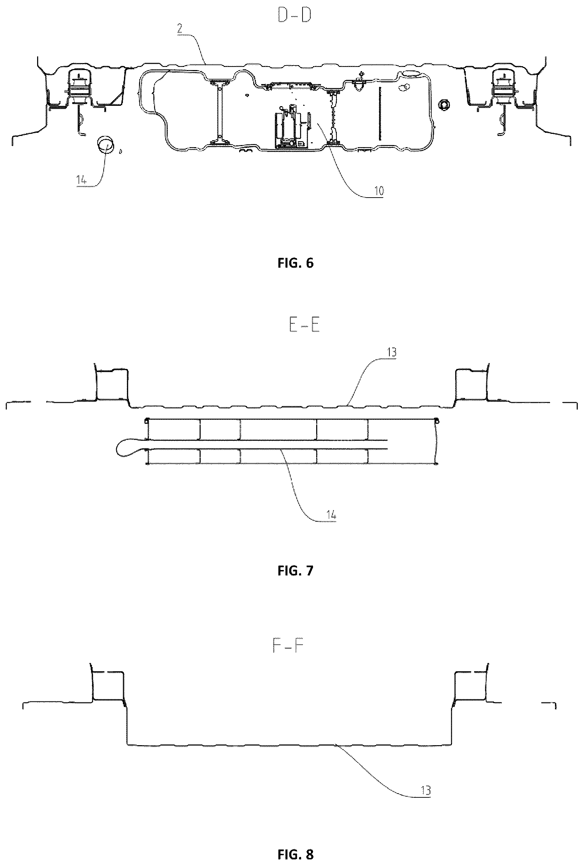

According to a first aspect of the present invention, a floor assembly for a vehicle is provided, as shown in FIG. 1 to FIG. 8, the floor assembly includes a front floor 1 and a middle-back floor 2, where a whole surface of the front floor 1 extends in a fore-aft direction of the vehicle; and the middle-back floor 2 is connected to the front floor 1 and a whole surface of the middle-back floor 2 extends in a first direction, and an included angle exists between the first direction and the fore-aft direction of the vehicle.

Through the above technical solution, namely, the floor assembly for the vehicle provided by the present invention, by connecting the middle-back floor 2 to the front floor 1, making the whole surface of the middle-back floor 2 extend in the first direction, and making the included angle between the first direction and the fore-aft direction (referring to a left-right direction in FIG. 1 or to a length direction of the vehicle) of the vehicle, that is, it may be understood that by constructing the middle-back floor 2 as being inclined relative to the front floor 1, a larger space of a passenger compartment in the vehicle is ensured, and while the use demands of the users in various scenes such as arrangement of a bed in the passenger compartment, use for a cargo compartment or refitting by using rails such as a track are conveniently met, an installation and arrangement demand for a plurality of components such as the vehicle-mounted charging assembly 7, the carbon tank 8, the oil tank 10 and the rear power assembly 11 may also be met, so a space utilization is high. In addition, the whole surface of the front floor 1 extends in the fore-aft direction of the vehicle, and meanwhile, the whole surface of the middle-back floor 2 extends in the first direction, in this way, a whole structure of the floor assembly of the vehicle may be flatter, so as to obtain a flat floor structure, a demand such as allowing a passenger in the passenger compartment to move freely or load and unload goods is conveniently met, and user experience is better improved.

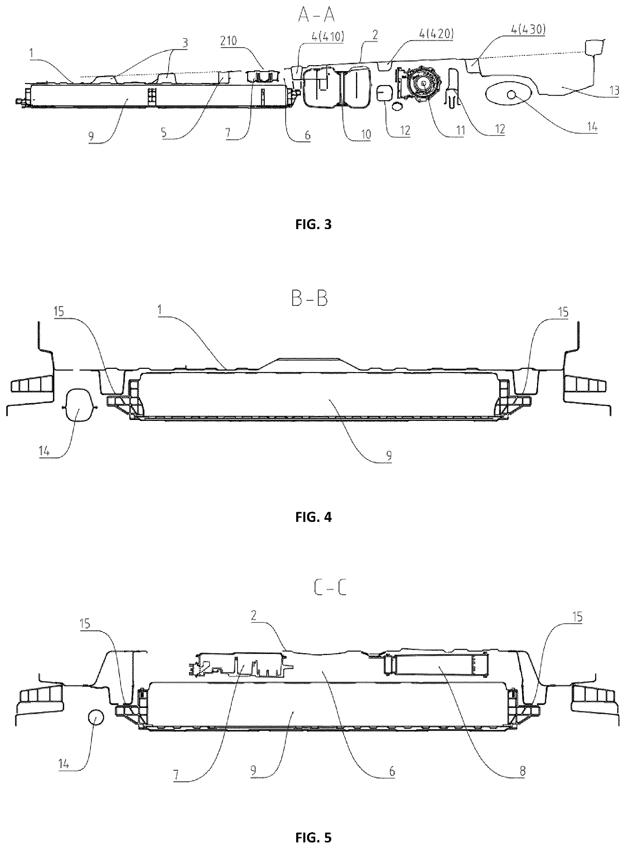

In some implementations, as shown in FIG. 1 and FIG. 3, a rear end of the middle-back floor 2 may be higher than a front end of the middle-back floor 2. That is, it may be understood that the middle-back floor 2 is connected to the front floor 1 and the whole surface of the middle-back floor is arranged by extending upwards and obliquely from front to back in the first direction. In this way, it is conducive to ensuring that the front floor 1 is located at a lowest position of the floor assembly, so as to obtain a larger passenger compartment space in the vehicle and meanwhile, also meet the installation and arrangement demand for the plurality of components such as the vehicle-mounted charging assembly 7, the carbon tank 8, the oil tank 10 and the rear power assembly 11 outside the vehicle, so the space utilization ratio is high. In addition, the front floor 1 is located at the lowest position of the floor assembly, which is conducive to reducing heights of doorsills of front doors and back doors, ensuring convenience of getting on and off the vehicle and improving the user experience.

In addition, in some implementations, as shown in FIG. 1 and FIG. 3, the floor assembly may further include at least one front transverse beam 3, the at least one front transverse beam 3 is arranged on an upper surface of the front floor 1, and an upper surface of at least one of the front transverse beam 3 and an upper surface of the middle-back floor 2 are coplanar. That is, it may be understood that when a plurality of front transverse beams 3 are arranged, for example, two front transverse beams 3 are arranged, an upper surface of one front transverse beam 3, adjacent to a middle transverse beam 5, of the two front transverse beams 3 may be coplanar with the upper surface of the middle-back floor 2, or in some other alternative implementations, upper surfaces of the two front transverse beams 3 may be coplanar with the upper surface of the middle-back floor 2. In this way, while the larger passenger compartment space in the vehicle is ensured, it is convenient to extend a seat track arranged on the upper surface of the middle-back floor 2 to the upper surface of the front transverse beam 3 of the front floor 1, so as to achieve common-rail linkage arrangement of a plurality of rows of passenger seats, a demand of installing and arranging a long-distance seat track in the vehicle is conveniently met, the user experience is better improved, universality of the components is improved, and thus refitting and arrangement of an in-vehicle space are convenient for a user according to self demands.

It needs to be noted that as shown in FIG. 1, the front floor 1 and the middle-back floor 2 may be connected through the middle transverse beam 5 (which is to be described below in detail), and in this case, the upper surface of the at least one front transverse beam 3 arranged on the upper surface of the front floor 1 may be coplanar with the upper surface of the middle-back floor 2. Or, in some alternative implementations not shown in the figures, the front floor 1 and the middle-back floor 2 may also be connected through the front transverse beam 3, and in this case, the upper surface of the at least one front transverse beam 3 arranged on the upper surface of the front floor 1 may also be coplanar with the upper surface of the middle-back floor 2. This type of transformation is not specifically limited in the present invention, and those skilled in the art may make an adaptive design according to actual application demands.

In addition, by making the upper surface of the at least one front transverse beam 3 coplanar with the upper surface of the middle-back floor 2, a demand such as installing and arranging a center console track of the vehicle can be conveniently met, for example, the center console track conveniently extends from a position above the front floor 1 to a position above the middle-back floor 2, so as to achieve a purpose of smoothly sliding a center console on the floor assembly and thus changing a position of the center console, the use demand of the user in various scenes is met, and the user experience is improved.

It needs to be noted that the above seat track may have an extending length such as 1760 mm to 2400 mm, so as to meet the use demand of the user in various scenes. The present invention is not limited to this, and those skilled in the art may adaptively design the extending length of the seat track according to the in-vehicle space. In addition, the above center console track may have an extending length such as 1720 mm to 2800 mm, so as to meet the use demand of the user in various scenes. The present invention is not limited to this, and those skilled in the art may adaptively design the extending length of the center console track according to the in-vehicle space. In addition, the present invention does not specifically limit extending lengths of the front floor 1 and the middle-back floor 2, and those skilled in the art may make an adaptive design according to actual application demands.

In addition, the above specific embodiment in which the seat track of the vehicle is arranged on the upper surface of the middle-back floor 2 and extends to the position above the front floor 1 to be connected to the front transverse beam 3 on the front floor 1 is an example. In some other implementations not shown in the figures, the above seat track of the vehicle may also be arranged only on the upper surface of the middle-back floor 2. This type of transformation is not specifically limited in the present invention, and those skilled in the art may make an adaptive design according to actual application demands.

In addition, the above specific embodiment in which the rear end of the middle-back floor 2 may be higher than the front end of the middle-back floor 2 is an example. In some other implementations not shown in the figures, the rear end of the middle-back floor 2 may also be lower than the front end of the middle-back floor 2, so as to obtain the larger passenger compartment space in the vehicle. This type of transformation is not specifically limited in the present invention, and those skilled in the art may make an adaptive design according to actual application demands.

Given that the installation and arrangement demand of the plurality of components such as the vehicle-mounted charging assembly 7, the carbon tank 8, the oil tank 10 and the rear power assembly 11 outside the vehicle can be met while the larger passenger compartment space in the vehicle is obtained, in some implementations, the included angle a between the first direction and the fore-aft direction of the vehicle may be less than 3°. For example, the included angle a may be, for example, 2.95°. Besides, the middle-back floor 2 may be connected to the front floor 1 and the whole surface of the middle-back floor is arranged by extending upwards and obliquely from front to back in the first direction, so as to obtain the larger passenger compartment space in the vehicle and meanwhile, also meet the installation and arrangement demand of the plurality of components such as the vehicle-mounted charging assembly 7, the carbon tank 8, the oil tank 10 and the rear power assembly 11 outside the vehicle, and a high structural strength of the whole vehicle is ensured.

In addition, in some implementations, as shown in FIG. 1 and FIG. 3, the front end of the middle-back floor 2 may be higher than the front floor 1 in a height direction (which may refer to an up-down direction in FIG. 3) of the vehicle, so as to obtain the larger passenger compartment space in the vehicle and meanwhile, also meet the installation and arrangement demand of the plurality of components such as the vehicle-mounted charging assembly 7, the carbon tank 8, the oil tank 10 and the rear power assembly 11 outside the vehicle. For example, the front floor 1 and the middle-back floor 2 may be connected through the middle transverse beam 5, that is, it may be understood that the front floor 1 may be, for example, connected to a lower plate body of the middle transverse beam 5, and meanwhile, the middle-back floor 2 may be, for example, connected to an upper plate body of the middle transverse beam 5, so as to ensure that the front floor 1 and the middle-back floor 2 are stably connected, and a structural strength of the floor assembly is improved.

Certainly, it needs to be noted that the above specific embodiment in which the front end of the middle-back floor 2 may be higher than the front floor 1 in the height direction of the vehicle is an example. In some other implementations not shown in the figures, the front end of the middle-back floor 2 may be flush with the front floor 1 in the height direction of the vehicle. This type of transformation is not specifically limited in the present invention, and those skilled in the art may make an adaptive design according to actual application demands.

In view of the purpose of ensuring that a floor surface of the floor assembly is flatter, in some implementations, as shown in FIG. 1 and FIG. 3, the floor assembly may further include at least one front transverse beam 3 and at least one rear transverse beam 4. The at least one front transverse beam 3 is arranged on the upper surface of the front floor 1, that is, each front transverse beam 3 is arranged on the upper surface of the front floor 1. The at least one rear transverse beam 4 is arranged on a lower surface of the middle-back floor 2, that is, each rear transverse beam 4 is arranged on the lower surface of the middle-back floor 2. In this way, as all the front transverse beams 3 are arranged on the upper surface of the front floor 1, the front floor 1 may be located at the lowest position of the floor assembly, which is conducive to reducing the heights of the doorsills of the front door and the back door, ensuring the convenience of getting on and off the vehicle and improving the user experience.

In addition, as all the rear transverse beams 4 are arranged on the lower surface of the middle-back floor 2, occupation of the passenger compartment space in the vehicle by the rear transverse beams 4 is reduced, the passenger compartment space in the vehicle may be saved to the maximum degree, especially, a space of the passenger compartment in the vehicle in the height direction of the vehicle, and the passenger compartment space in the vehicle is better widened. Besides, as all the rear transverse beams 4 are arranged on the lower surface of the middle-back floor 2, the whole floor surface of the middle-back floor 2 in the passenger compartment may be flatter, no step exists, and an all-flat floor structure design of the middle-back floor 2 is better ensured. In addition, for meeting the use demand of the user in various scenes such as arrangement of a bed in the passenger compartment, use for the cargo compartment or refitting by using rails such as the track, refitting and arrangement of the in-vehicle space are convenient for the user according to the self demands by using the all-flat floor structure design of the middle-back floor 2, and the user experience is improved.

In addition, in some implementations, as shown in FIG. 3, the at least one rear transverse beam 4 may be provided with at least one of an oil tank installation structure or a battery pack installation structure, so an installation point may be provided for components such as the oil tank 10 and the battery pack 9 through the rear transverse beam 4. In this way, at least one of the oil tank installation structure or the battery pack installation structure is arranged on the rear transverse beam 4, so the number of components to be arranged may be reduced, an integration level is high, field installation and arrangement are convenient, a space utilization ratio below the middle-back floor 2 is better improved, and while the larger space of the passenger compartment in the vehicle is ensured, the installation and arrangement demand of the components such as the oil tank 10 and the battery pack 9 outside the vehicle may also be met.

In addition, in some implementations, the at least one front transverse beam 3 may be provided with at least one of a front seat installation structure or the battery pack installation structure, so as to conveniently meet more use demands of the user, and improve the user experience. Besides, by arranging the at least one of the front seat installation structure or the battery pack installation structure on the front transverse beam 3, the number of the components to be arranged may be reduced, the integration level is high, field installation and arrangement are convenient, a space utilization ratio above the front floor 1 is better improved, and the passenger compartment space in the vehicle is widened.

In view of the purpose of meeting the demand of installing and designing different vehicle models and different types of components, in some implementations, the above at least one front transverse beam 3 may be positionally adjustbly connected to the front floor 1, so a position of arranging the front transverse beam 3 relative to the front floor 1 may be adaptively adjusted according to the demands of installing and designing the different vehicle models and different types of components, and applicability is higher.

In addition, the above at least one rear transverse beam 4 may also be positionally adjustbly connected to the middle-back floor 2, so a position of arranging the rear transverse beam 4 relative to the middle-back floor 2 may be adaptively adjusted according to the demands of installing and designing the different vehicle models and different types of components, and the use demands in different scenes are met.

For meeting a platform-based development design demand of the different vehicle models, in some implementations, a connection of the front floor 1 and the middle-back floor 2 is constructed to enable selectively designing a position of the middle-back floor 2 relative to the front floor 1 in the fore-aft direction so as to enable changing a length of the floor assembly in the fore-aft direction, so that a length of the floor assembly in the fore-aft direction is adaptively changed, and the platform-based development design demand of the different vehicle models is met.

For example, in some implementations, as shown in FIG. 1, the front floor 1 and the middle-back floor 2 may be connected through the middle transverse beam 5, the floor assembly is constructed to enable changing a position of the middle-back floor 2 relative to the front floor 1 in the fore-aft direction by designing a position of the middle transverse beam 5 relative to the front floor 1 and/or the middle-back floor 2, and thus implementing change of a length of the floor assembly in the fore-aft direction, so the platform-based development design demand of the different vehicle models is met.

Or, in some alternative implementations, as shown in FIG. 1, the floor assembly may also be constructed to enable changing the position of the middle-back floor 2 relative to the front floor 1 in the fore-aft direction by selecting the middle transverse beam 5 having different sizes in the fore-aft direction, and thus implementing change of the length of the floor assembly in the fore-aft direction, so the platform-based development design demand of the different vehicle models is met.

Or, in some alternative implementations, the front floor 1 may also be constructed to enable selectably designing a length of the front floor 1 in the fore-aft direction so as to enable changing the length of the floor assembly by changing the length of the front floor 1. That is, it may be understood that those skilled in the art may increase or reduce a wheel base by designing the length of the front floor 1 according to demands, so the platform-based development design demand of the different vehicle models is met. In this way, a demand for increasing or reducing the wheel base in a case of slightly changing the floor assembly can be met, and the platform-based development design demand of the various vehicle models is met.

For example, in some implementations, as shown in FIG. 1, by increasing or reducing spacing b between the middle transverse beam 5 and the adjacent front transverse beam 3 on the front floor 1, and increasing or reducing the number of front transverse beams 3 to be arranged between the middle transverse beam 5 and the adjacent front transverse beam 3 on the front floor 1, the purpose of changing the length of the floor assembly by changing the length of the front floor 1 may be achieved, and meanwhile, the high structural strength of the whole floor assembly can also be ensured.

It needs to be noted that those skilled in the art may select any one of the above specific implementations in the above various specific embodiments for changing the length of the floor assembly in the fore-aft direction, or may also adopt the various specific implementations at the same time for achieving the purpose of changing the length of the floor assembly in the fore-aft direction, which is not specifically limited in the present invention.

In addition, in view of ensuring a high structural strength of the whole front floor 1 and improving a strength of a vehicle body, as shown in FIG. 1, when the front floor 1 and the middle-back floor 2 are connected through the middle transverse beam 5, the spacing b between the middle transverse beam 5 and the adjacent front transverse beam 3 on the front floor 1 and the number of the front transverse beams 3 on the front floor 1 may be determined through the length of the front floor 1, so that the whole front floor 1 has the high structural strength, the strength of the vehicle body is enhanced, and meanwhile, the demand of installing and arranging different types of, for example, battery packs 9 or front seat tracks can also be met.

In addition, the specific number of the rear transverse beams 4 to be arranged may also be adaptively designed by those skilled in the art through, for example, a length of the middle-back floor 2 or according to, for example, the installation demand of different types of components such as the oil tank 10 and the battery pack 9 outside the vehicle, so that while the installation demands of the different types of components are met, the high structural strength of the whole middle-back floor 2 can be ensured, and the strength of the vehicle body is better improved.

In some implementations, as shown in FIG. 3 and FIG. 5, an installation space 6 adjacent to a connection position of the middle-back floor 2 and the front floor 1 may be formed below the middle-back floor 2, so the demand of installing and arranging the components such as the vehicle-mounted charging assembly 7 and the carbon tank 8 may be met by using the installation space 6, and the space utilization ratio below the middle-back floor 2 is better improved.

For example, as shown in FIG. 1 and FIG. 3, the front floor 1 and the middle-back floor 2 may be connected through the middle transverse beam 5, the installation space 6 is located between the middle transverse beam 5 and the rear transverse beam 4 on the lower surface of the middle-back floor 2, so the demand of installing and arranging the components such as the vehicle-mounted charging assembly 7 and the carbon tank 8 is met, and the space utilization ratio below the middle-back floor 2 is better improved.

According to a second aspect of the present invention, a vehicle is provided, including the floor assembly provided in the first aspect. In addition, the vehicle further has all beneficial effects of the above floor assembly, which is not repeated in detail here in the present invention.

In some implementations, as shown in FIG. 3 and FIG. 5, an installation space 6 below a middle-back floor 2 and adjacent to a connection position of the middle-back floor 2 and a front floor 1 may be configured to install at least one of a vehicle-mounted charging assembly 7 or a carbon tank 8. In this way, a risk of high-pressure exposure of the vehicle-mounted charging assembly 7 when collision occurs may be reduced, and the safety of the whole vehicle is improved.

It needs to be noted that the above vehicle-mounted charging assembly 7 may be integration of a control center unit (CCU) and an on-board charger (OBC). The number of the components is better reduced, and field installation and arrangement are convenient. Meanwhile, at least one of the vehicle-mounted charging assembly 7 and the carbon tank 8 is arranged in the above installation space 6, which makes the arrangement of the whole vehicle more compact, improves the space utilization ratio and provides more design space for design of the whole vehicle.

In some implementations, as shown in FIG. 3 and FIG. 4, the vehicle may include a battery pack 9 located below the front floor 1, at least two front floor lower longitudinal beams 15 may be arranged on a lower side of the front floor 1, and the battery pack 9 is connected to the at least two front floor lower longitudinal beams 15, which is conducive to improving torsional rigidity of the whole vehicle and meanwhile implementing improvement on a side impact strength.

Given that the battery pack 9 having different lengths and sizes may affect the installation space 6, specifically, in a case where the battery pack 9 is, for example, a long-size battery pack 9, when the long-size battery pack 9 is arranged below the front floor 1, part of a pack body of the long-size battery pack 9 may extend to a position below the installation space 6, so at least one of the vehicle-mounted charging assembly 7 or the carbon tank 8 is located between the battery pack 9 and the middle-back floor 2. In this way, the vehicle-mounted charging assembly 7 and the carbon tank 8 in the installation space 6 may be shielded and protected through an arrangement form of the long-size battery pack 9, a risk of damage to the vehicle-mounted charging assembly 7 and the carbon tank 8 is reduced, and the safety of the whole vehicle is improved.

Certainly, as the vehicle-mounted charging assembly 7 and the carbon tank 8 in the installation space 6 are shielded and protected through the arrangement form of the long-size battery pack 9, a field operator cannot conveniently assemble, disassemble and replace the vehicle-mounted charging assembly 7 and the carbon tank 8 in the installation space 6. In some implementations, an assembly and disassembly opening 210 may be formed in a position, corresponding to the installation space 6, of the middle-back floor 2, so that without disassembling the battery pack 9, the vehicle-mounted charging assembly 7 and the carbon tank 8 in the installation space 6 may be assembled and disassembled through the assembly and disassembly opening 210, so operations are convenient.

Alternatively, in some other implementations not shown in the figures, in a case where the battery pack 9 is, for example, a short-size battery pack 9, when the short-size battery pack 9 is arranged below the front floor 1, the short-size battery pack 9 can avoid the installation space 6 from a position below the installation space 6, so as to form an avoidance channel, below the installation space 6, for at least one of the vehicle-mounted charging assembly 7 or the carbon tank 8, so that the field operator can assemble and disassemble the vehicle-mounted charging assembly 7 and the carbon tank 8 located in the installation space 6 by using the avoidance channel, and operations are convenient.

In some implementations, in a case where the battery pack 9 is, for example, the long-size battery pack 9, as shown in FIG. 3, a first rear transverse beam 410 adjacent to a rear end of the front floor 1 may be arranged below the middle-back floor 2, the installation space 6 is located between the rear end of the front floor 1 and the first rear transverse beam 410, and the battery pack 9 is selectably connected to the first rear transverse beam 410. For example, a battery pack installation structure may be arranged on the first rear transverse beam 410, in this way, by integrating the battery pack installation structure onto the first rear transverse beam 410, the number of components is better simplified, field installation operations are convenient, meanwhile, a space utilization ratio of an exterior of the vehicle can also be improved, a larger design space is provided for arrangement of the whole vehicle, the passenger compartment space in the vehicle is better saved to the maximum degree, especially, a space of the passenger compartment in the vehicle in the height direction of the vehicle, and the passenger compartment space in the vehicle is better widened.

In some implementations, as shown in FIG. 3, the vehicle may further include an oil tank 10. The oil tank 10 and the battery pack 9 are spaced apart in the fore-aft direction of the vehicle. The oil tank 10 is located on a rear side of the battery pack 9 and on a lower side of the middle-back floor 2 of the floor assembly. At least one of the vehicle-mounted charging assembly 7 or the carbon tank 8 is arranged between the battery pack 9 and the oil tank 10. Alternatively, at least one of the vehicle-mounted charging assembly 7 or the carbon tank 8 is arranged between the battery pack 9 and the middle-back floor 2. That is, it may be understood that the above installation space 6 may be defined jointly by the battery pack 9, the oil tank 10, a connection position of the middle-back floor 2 and the front floor 1, and the middle-back floor 2 shown as an example in FIG. 3, so that the risk of damage to the vehicle-mounted charging assembly 7 and the carbon tank 8 when collision occurs is reduced, the safety of the whole vehicle is improved, meanwhile, the arrangement of the whole vehicle can be more compact, the space utilization ratio is improved, and more design space is provided for the design of the whole vehicle.

In addition, in some implementations, as shown in FIG. 3, the vehicle may further include a rear power assembly 11. The battery pack 9, the oil tank 10 and the rear power assembly 11 are spaced apart in the fore-aft direction of the vehicle. The rear power assembly 11 is located on a rear side of the oil tank 10 and on the lower side of the middle-back floor 2 of the floor assembly. In this way, the battery pack 9, the oil tank 10 and the rear power assembly 11 may be arranged on the floor assembly of the vehicle in order, field installation operations are convenient, meanwhile, the arrangement of the whole vehicle can be more compact, the space utilization ratio is improved, and the passenger compartment space in the vehicle is better improved.

As shown in FIG. 3, an upper surface of the oil tank 10 may extend in the first direction, which is conducive to ensuring that the upper surface of the oil tank 10 is attached to a lower surface of the middle-back floor 2, and the reliability is high. Certainly, in some alternative implementations, the upper surface of the oil tank 10 may also be spaced apart from the lower surface of the middle-back floor 2. This type of transformation is not specifically limited in the present invention, and those skilled in the art may make an adaptive design according to actual application demands.

In addition, in some implementations, a lower surface of the oil tank 10 may extend in the fore-aft direction of the vehicle. For example, the lower surface of the oil tank 10 may be coplanar with a lower surface of the battery pack 9, in this way, a larger space for the oil tank 10 is ensured, meanwhile, occupation of more space is avoided, it is better ensured that the front floor 1 is located at the lowest position of the floor assembly, the floor assembly can be located at a low position of the whole vehicle, heights of doorsills of the front door and the back door are effectively reduced, the convenience of getting on and off the vehicle is ensured, and the user experience is improved.

In addition, for ensuring that the rear power assembly 11 is stably connected to the middle-back floor 2, in some implementations, as shown in FIG. 3, the vehicle may further include a rear subframe 12, the rear power assembly 11 is installed on the rear subframe 12, and the rear subframe 12 is connected to a middle-back floor 2 through a longitudinal beam located below the middle-back floor 2, so that the rear power assembly 11 can be stably connected to the middle-back floor 2 through the rear subframe 12, installation operations are convenient, and the reliability is high.

For example, in some implementations, as shown in FIG. 3, a plurality of rear transverse beams 4 below the middle-back floor 2 may include a first rear transverse beam 410, a second rear transverse beam 420 and a third rear transverse beam 430 which are spaced apart from a front side to a rear side of the vehicle, the battery pack 9 is selectably connected to the first rear transverse beam 410, the oil tank 10 is connected to the first rear transverse beam 410 and the second rear transverse beam 420, the second rear transverse beam 420 and the third rear transverse beam 430 are in lap joint with the longitudinal beam respectively, the rear subframe 12 has a first connection structure and a second connection structure, the first connection structure is connected to a lap joint position of the second rear transverse beam 420 and the longitudinal beam, and the second connection structure is connected to a lap joint position of the third rear transverse beam 430 and the longitudinal beam. In this way, the battery pack 9, the oil tank 10 and the rear power assembly 11 are arranged on the floor assembly of the vehicle in order, the field installation operations are convenient, the arrangement of the whole vehicle is more compact, the space utilization ratio is improved, and the passenger compartment space in the vehicle is better widened.

It needs to be noted that the present invention does not specifically limit specific structures of the first connection structure and the second connection structure, and those skilled in the art can make an adaptive design according to actual application demands as long as the rear power assembly 11 can be stably connected to the middle-back floor 2 through the rear subframe 12. In addition, the present invention does not specifically limit specific structures of the battery pack 9, the oil tank 10, the rear power assembly 11 and the rear subframe 12, and those skilled in the art may make an adaptive design according to actual application demands.

In addition, in some implementations, as shown in FIG. 1, FIG. 3, FIG. 7 and FIG. 8, the floor assembly may further include a rear storage structure 13 connected to a rear end of the middle-back floor 2, and the rear storage structure 13 is at least partially located on a rear side of the rear power assembly 11, so the use demands of the user in more scenes can be met, the arrangement of the whole structure is more compact, and the space utilization ratio is better improved.

For achieving the purpose of reducing the heights of the doorsills of the front door and the back door and ensuring the convenience of getting on and off the vehicle by enabling the floor assembly to be located at the low position of the whole vehicle, in some implementations, a lowest point of the rear storage structure 13 is not less than a height of a lower edge of the battery pack 9, occupation of too much space by the rear storage structure 13 is reduced, it is better ensured that the front floor 1 is located at the lowest position of the floor assembly, the larger passenger compartment space in the vehicle is obtained, the heights of the doorsills of the front door and the back door can be reduced, the convenience of getting on and off the vehicle is ensured, and the user experience is improved.

For example, in some implementations, the rear storage structure 13 may extend vertically to the height of the lower edge of the battery pack 9 from a height of the rear end of the middle-back floor 2, a larger storage space in the rear storage structure 13 is ensured, it may further be ensured that the front floor 1 is located at the lowest position of the floor assembly, the larger passenger compartment space in the vehicle is obtained, the heights of the doorsills of the front door and the back door can be reduced, the convenience of getting on and off the vehicle is ensured, and the user experience is improved.

In addition, the above vehicle may be, for example, a new energy vehicle. The new energy vehicle may be a pure electric vehicle, a hybrid electric vehicle or an extended-range electric vehicle, and the above vehicle may also be, for example, a fuel vehicle. In addition, the above vehicle may be applied to, for example, an SUV.

It needs to be noted that in a case where it is the fuel vehicle or the new energy vehicle is, for example, the hybrid electric vehicle or the extended-range electric vehicle, as shown in FIG. 3, an exhaust assembly 14 is selectably arranged the rear power assembly 11 and the rear storage structure 13, normal running of an engine and effective emission of exhaust gas are ensured, noise released by the engine may be reduced through a silencer part in the exhaust assembly 14, a quieter driving environment is provided, and driving experience is improved.

In a case where the new energy vehicle is, for example, the pure electric vehicle, the exhaust assembly 14 arranged between the rear power assembly 11 and the rear storage structure 13 may be omitted, and adaptively, the rear storage structure 13 may be sunk at a position where the exhaust assembly 14 is omitted, so as to achieve the purpose of increasing a storage space in the rear storage structure 13, and the user experience is improved.

Preferred implementations of the present invention are described in detail above with reference to the accompanying drawings. However, the present invention is not limited to the specific details in the above implementations. Within the scope of the technical concept of the present invention, various simple variations may be made to the technical solutions of the present invention, and these simple variations fall within the protection scope of the present invention.

In addition, it needs to be noted that various specific technical features described in the specific implementations, without contradictions, may be combined in any appropriate manner. For avoiding unnecessary repetitions, the present invention does not describe various possible combination manners.

In addition, various different implementations of the present invention may be combined at will, which are also regarded as the content disclosed by the present invention as long as the concept of the present invention is not violated.

## Claims

1. A floor assembly (100) for a vehicle, comprising:
a front floor (1), wherein a whole surface of the front floor (1) extends in a fore-aft direction of the vehicle; and
a middle-back floor (2), wherein the middle-back floor (2) is connected to the front floor (1) and a whole surface of the middle-back floor (2) extends in a first direction, and an included angle exists between the first direction and the fore-aft direction of the vehicle.

2. The floor assembly (100) for the vehicle according to claim 1, wherein a rear end of the middle-back floor (2) is higher than a front end of the middle-back floor (2).

3. The floor assembly (100) for the vehicle according to claim 2, wherein the floor assembly (100) further comprises at least one front transverse beam (3), the at least one front transverse beam (3) is arranged on an upper surface of the front floor (1), and an upper surface of at least one of the front transverse beam (3) and an upper surface of the middle-back floor(2) are coplanar.

4. The floor assembly (100) for the vehicle according to any one of claims 1 to 3, wherein the included angle between the first direction and the fore-aft direction of the vehicle is less than 3°.

5. The floor assembly (100) for the vehicle according to any one of claims 1 to 4, wherein the front end of the middle-back floor (2) is higher than the front floor (1) in a height direction of the vehicle.

6. The floor assembly (100) for the vehicle according to any one of claim 1 to 5, wherein the floor assembly (100) further comprises at least one front transverse beam (3) and at least one rear transverse beam (4), the at least one front transverse beam (3) is arranged on an upper surface of the front floor (1), and the at least one rear transverse beam (4) is arranged on a lower surface of the middle-back floor (2);
optionally, wherein the at least one front transverse beam (3) is positionally adjustably connected to the front floor (1); and/or
the at least one rear transverse beam (4) is positionally adjustably connected to the middle-back floor (2);
optionally, wherein the at least one rear transverse beam (4) is provided with at least one of an oil tank installation structure or a battery pack installation structure; and/or the at least one front transverse beam (3) is provided with at least one of a front seat installation structure or a battery pack installation structure;
optionally, wherein the front floor (1) and the middle-back floor (2) are connected through a middle transverse beam (5), and spacing between the middle transverse beam(5) and an adjacent front transverse beam (3) on the front floor (1) and the number of the front transverse beams (3) on the front floor (1) are determined through a length of the front floor (1).

7. The floor assembly (100) for the vehicle according to any one of claims 1 to 6, wherein a connection of the front floor (1) and the middle-back floor (2) is constructed to enable selectively designing a position of the middle-back floor (2) relative to the front floor (1) in the fore-aft direction so as to enable changing a length of the floor assembly (100) in the fore-aft direction;
optionally, wherein the front floor (1) and the middle-back floor (2) are connected through a middle transverse beam (5), and the floor assembly (100) is constructed to change the position of the middle-back floor (2) relative to the front floor (1) in the fore-aft direction by designing a position of the middle transverse beam (5) relative to the front floor (1) and/or the middle-back floor (2); and/or
the floor assembly (100) is constructed to change the position of the middle-back floor (2) relative to the front floor (1) in the fore-aft direction by selecting the middle transverse beam (5) having different sizes in the fore-aft direction.

8. The floor assembly (100) for the vehicle according to any one of claims 1 to 7, wherein an installation space (6) adjacent to a connection position of the middle-back floor (2) and the front floor (1) is formed below the middle-back floor (2);
optionally, wherein the front floor (1) and the middle-back floor (2) are connected through a middle transverse beam (5), and the installation space (6) is located between the middle transverse beam (5) and a rear transverse beam (4) on a lower surface of the middle-back floor (2).

9. A vehicle, comprising the floor assembly (100) according to any one of claims 1 to 8.

10. The vehicle according to claim 14, wherein an installation space (6) below a middle-back floor (2) and adjacent to a connection position of the middle-back floor (2) and a front floor (1) is configured to install at least one of a vehicle-mounted charging assembly (7) or a carbon tank (8);
optionally, wherein the vehicle comprises a battery pack (9) located below the front floor (1);
wherein the battery pack (9) extends to a position below the installation space (6), so that at least one of the vehicle-mounted charging assembly (7) or the carbon tank (8) is located between the battery pack (9) and the middle-back floor (2); or
the battery pack (9) avoids the installation space (6) from a position below the installation space (6), so that an avoidance channel for at least one of the vehicle-mounted charging assembly (7) or the carbon tank (8) is formed below the installation space (6);
optionally, wherein a first rear transverse beam (410) adjacent to a rear end of the front floor (1) is arranged below the middle-back floor (2), the installation space (6) is located between the rear end of the front floor (1) and the first rear transverse beam (410), and the battery pack (9) is selectably connected to the first rear transverse beam (410).

11. The vehicle according to claim 9 or 10, wherein the vehicle comprises a battery pack (9) and an oil tank (10) which are spaced apart in a fore-aft direction of the vehicle, and the battery pack (9) and the oil tank (10) are located on a lower side of the floor assembly (100);
wherein at least one of a vehicle-mounted charging assembly (7) or a carbon tank (8) is arranged between the battery pack (9) and the oil tank (10); or
the at least one of the vehicle-mounted charging assembly (7) or the carbon tank (8) is arranged between the battery pack (9) and a middle-back floor (2).

12. The vehicle according to any one of claims 9 to 11, wherein the vehicle comprises a battery pack (9), an oil tank (10) and a rear power assembly (11) which are spaced apart in a fore-aft direction of the vehicle, and the battery pack (9), the oil tank (10) and the rear power assembly (11) are arranged on a lower side of the floor assembly (100);
optionally, wherein an upper surface of the oil tank (10) extends in a first direction, and the upper surface of the oil tank (10) in contact with or spaced apart from a lower surface of the middle-back floor (2); and/or
a lower surface of the oil tank (10) extends in the fore-aft direction of the vehicle;
optionally, wherein the vehicle further comprises a rear subframe (12), the rear power assembly (11) is installed on the rear subframe (12), and the rear subframe (12) is connected to a middle-back floor (2) through a longitudinal beam located below the middle-back floor (2);
optionally, wherein a plurality of rear transverse beams (4) below the middle-back floor (2) comprise a first rear transverse beam (410), a second rear transverse beam (420) and a third rear transverse beam (430) which are spaced apart from a front side to a rear side of the vehicle, the battery pack (9) is selectably connected to the first rear transverse beam (410), the oil tank (10) is connected to the first rear transverse beam (410) and the second rear transverse beam (420), the second rear transverse beam (420) and the third rear transverse beam (430) are in lap joint with the longitudinal beam respectively, the rear subframe (12) has a first connection structure and a second connection structure, the first connection structure is connected to a lap joint position of the second rear transverse beam (420) and the longitudinal beam, and the second connection structure is connected to a lap joint position of the third rear transverse beam (430) and the longitudinal beam;
optionally, wherein the floor assembly (100) further comprises a rear storage structure (13) connected to a rear end of the middle-back floor (2), and the rear storage structure (13) is at least partially located on a rear side of the rear power assembly (11);
optionally, wherein an exhaust assembly (14) is selectably arranged between the rear power assembly (11) and the rear storage structure (13); and/or
a lowest point of the rear storage structure (13) is not less than a height of a lower edge of the battery pack (9); and/or
the rear storage structure (13) extends vertically to the height of the lower edge of the battery pack (9) from a height of the rear end of the middle-back floor (2).

13. The vehicle according to any one of claims 10 to 12, wherein at least two front floor (1) lower longitudinal beams are arranged on a lower side of the front floor (1), and the battery pack (9) is connected to the at least two front floor (1) lower longitudinal beams.

14. The vehicle according to any one of claims 9 to 13, wherein the vehicle comprises a seat track, and the seat track is arranged on an upper surface of a middle-back floor (2); or
the seat track is arranged on the upper surface of the middle-back floor (2) and extends to a position above the front floor (1) to be connected to a front transverse beam (3) on the front floor (1);
optionally, wherein the seat track has an extending length ranging from 1760 mm to 2400 mm.

15. The vehicle according to any one of claims 9 to 14, wherein the vehicle further comprises a center console track, and the center console track extends to a position above a middle-back floor (2) from a position above a front floor (1);
optionally, wherein the center console track has an extending length ranging from 1720 mm to 2800 mm.
